# EUROPEAN PATENT APPLICATION

(11) **EP 0 525 788 A1**
(43) Date of publication of application: **03.02.1993**
(21) Application number: 92113063.9
(22) Date of filing: 30.07.1992
(51) Int. Cl.: E05F 15/16, E05F 15/00

(54) **Command device for electric windows, in particular for automobiles**

(30) Priority: 30.07.1991 IT TO910607
(71) Applicant: BITRON VIDEO S.r.l., I-10060 Cantalupa (TO) (IT)
(72) Inventor: Di Ninno, Franco, I-10100 Torino (IT); Castellar, Luciano, I-10095 Grugliasco (TO) (IT)
(74) Representative: Dini, Roberto, Dr. Ing.

(57) **Abstract**

The invention concerns a command device for electric windows, in particular for automobiles, of the type comprising manual command means able to pilot a direct current motor, to obtain the raising or lowering of the glass of the window, control means able to detect an end of run position of the window and means that indicate, to said control means, the position of the window during its run.

The main characteristic of the invention consists in the fact that the end of run position of the window is automatically memorised in appropriate memory means and the memorised value is automatically updated every time that said window reaches an end of run position being superior or equal to the position previously memorised.

## Description

The present invention concerns a command device for electric windows, in particular for automobiles, of the type comprising manual command means able to pilot a direct current motor, to obtain the raising or lowering of the glass of the window, control means able to reveal an end of run position of the glass and means that indicate, to said control means, the position of the window during its run.

Devices of the type mentioned above, are utilised in particular to raise or lower the glass of automobile windows. In such an utilisation it is important that the actuation of the windows does not excessively distract the attention of the driver and therefore for many years now there have been developed command devices, the so-called "one- touch" command, that allows, with a simple pressure of a button, to initiate a lowering or raising movement of the glass of the window. Such movement is automatically stopped when the window has reached the end of its run or has found an obstacle (the latter characteristic is necessary in order to conserve the motor efficiency over time also in avoiding dangerous pinching of the fingers or other parts of the body that users of the automobile may have inadvertently placed through the window).

In the known art, so as to determine that the end of run has been reached, sensor elements have been used applied in certain points within the door, or the functioning period of the motor has been timed, or the running of the current that supplies the motor has been studied, ill order to command the stopping of the same, or revolution counters have been utilised on the pulley system for determining the necessary number of revolutions for the glass of the window to reach an end of run position.

Some cases provide for revealing the end of run position of the window by way of reading resistor means.

All these solutions known have drawbacks.

The solution of using sensors applied in certain points within the door is expensive, complicated and has a poor level of reliability over time.

The timed actuation of the motor that moves the windows, has difficulty in satisfying the reliability requirements, in fact with the timed actuation it is possible to uselessly overcharge the motor, continuing to supply tension even when an obstacle has stopped the motion, before the window has reached the end of run and furthermore does not solve the security problem of the passengers of the car.

Circuits up to the present used to deduce from the current that circulates in the motor a signal apt to stop the movement of the windows, have demonstrated themselves to be expensive and not completely effective; in fact as they are based on the principle of removing supply from the motor when its current exceeds an established threshold value, they have produced unsatisfactory results due to variations presented by the current that circulates in the motor following different conditions of use (summer-winter, dry or damp weather) and as a consequence of the wear of the trimmings, of the assembly tolerances, etc. and therefore the difficulty to establish a prefixed threshold value of current that is suitable for all motors.

This device furthermore has the disadvantage of acting in the same way along the entire run of the window and even in the final section; the consequence is that if the obstacle that prevents the run of the window during the final section is one or more fingers of the hand, these would be seriously pinched before the blocking device is activated.

Revolution counters of the pulley of the system have not resulted in being reliable over time as they present drift problems due to eventual cable slippage on the actual pulley.

Finally, detectors of the end of run through the reading of resistor means have the drawback of not taking into consideration the eventual variations of the end of run, due to, for example, the hardening of the rubber trimmings, for example those of the superior abutments, with the passing of time.

Thus, the aim of the present invention is that of obtaining a command device for electric windows, in particular for automobiles, that does not have the aforementioned drawbacks and in particular allows for obtaining a device being secure, effective, reliable and economic.

Therefore in allowing for such aims the invention concerns a command device for electric windows, in particular for automobiles, of the type comprising manual command means able to pilot a direct current motor, to obtain the raising or lowering of the glass of the window, control means able to detect an end of run position of the window and means that indicate, to said control means, the position of the window during its run, characterised in that the memorising of the end of run position of the window is automatically updated every time that said window reaches an end of run position being superior or equal to the position previously memorised.

Further aims and advantages of the present invention will result in being clear from the specified description that follows executed with reference to the annexed drawings, supplied as a purely explanatory and non-limiting example, wherein:
in figure 1 an electric block diagram of the device is represented, according to the invention;
in figure 2 a flow chart of the dynamic updating of the device, according to the invention is represented;
in figure 3 a flow chart of the learning of the end of run of the first installation is represented, according to the invention;
in figure 4 a flow chart of the self-learning, of the device, of breakdowns, is represented, according to the invention.

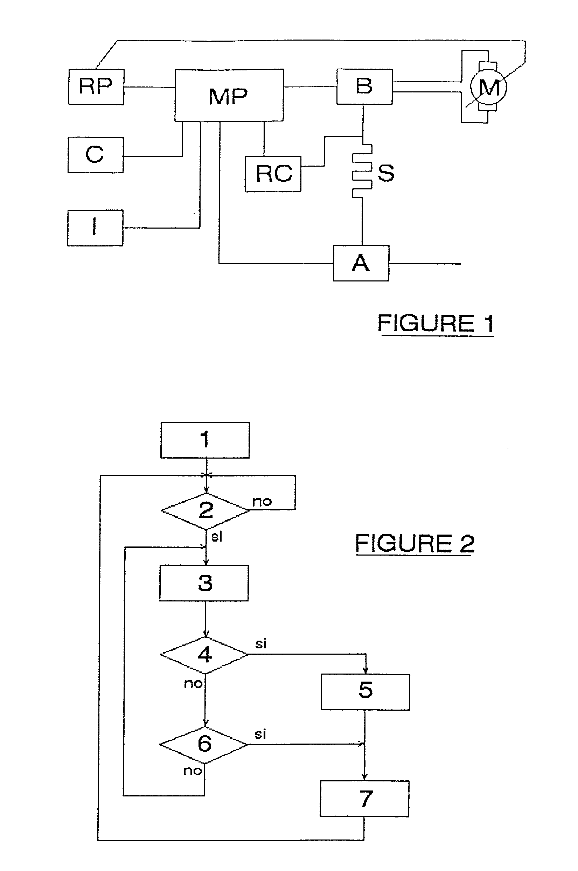

In Figure 1 with MP a microprocessor is indicated. With RP a position detector of the glass of the window is indicated. With C a command block is indicated for raising and lowering the glass of the window.

I indicates an inhibition block of the automatic movement of the glass of the window and a command for passing the hard points, such as, for example ice and resin (safety function inhibition). With the letter A an electric supply block of the device is indicated, while with RC a detector of current that circulates in a motor M is indicated. With B a power stage of the piloting of the motor is indicated. Finally with S a shunt resistor is indicated.

The device functions in the following way:
by way of the command block C the user requests that the device provides for the lowering or raising of the glass of a window, in this case we may suppose that raising is provided for.

Said command block C acts directly on a microprocessor MP which in its memory has previously memorised an end of run value of the glass of the window and also commands, through the buffer B, the motor M to initiate the raising. When window has reached an end of run position, for example when in the upper abutment position, a position revealed by the position detector RP, in the motor M a condition of over-current is verified which is revealed by the current detector RC through the shunt resistor S. The condition of over-current and of the vicinity of the position value of the window with the memorised value in the memory causes the device to intervene on the motor disabling it. In the meantime, the microprocessor confronts the previous end of run value memorised in the memory with the end of run value actually revealed. If from the aforementioned control the microprocessor verifies a difference between the end of run value previously memorised and the value actually revealed, it provides to memorise the latter. The inhibition block I has the function of deactivating the automatic functioning of the device and to inhibit the safety function for passing the hard points. Such function will be better specified in the following description.

In figure 2 with 1 a block of initiating operations is indicated. Such block reads the data memorised by the control means of the end of run value and passes the control to the successive block 2.

Block 2 is a test block, it verifies whether the motor is on. In the affirmative case control passes to the block 3, in the negative case the control returns to its input.

Block 3 provides for reading the data supplied by the resistor means, for example a potentiometer, of revelation of the window position and passes the control to block 4.

Block 4 is a verifying block, it verifies whether the read value supplied by the resistor means is minor or equal to the value memorised by the control means. In the affirmative case control passes to block 5, in the negative case control passes to the block 6. It is appropriate to specify that the value of the potentiometer decreases as the window approaches to the end of run position (superior abutment).

Block 5 provides to substitute in the memory data previously memorised with a new value supplied by the potentiometer, then passes the control to the block 7.

Block 6 is a test block, it verifies whether it is necessary to disable the motor even if the window has not arrived in its end of run position because, for example an over-current condition has been verified in the motor due to an obstacle in the window run. In the affirmative case control passes to block 7, in the negative case the control returns to the block 3.

Block 7 provides to remove the supply from the motor and returns the control to the block 2.

Besides the memorising of the end of the window run, it is possible memorise different values of the window position compared to its run. This is made possible by the fact that the microprocessor is able to create in its interior a table where, in the phase of the first installation of the system, with every resistance value of the potentiometer, that controls the entire run of the glass of the window, a current value is associated circulating in the electric motor. This allows to couple two indications, window position - electric characteristic of the system, in a such a way that said system cannot interpret an intrinsic mechanical hardening of the system as an impediment that activates the security function. This latter function consists in the stopping and the inversion of the motion of the electric motor.

In other words, in associating a current value to the window position allows for avoiding that a partial impediment of the motion of the window, which could be a defect of the window guides, can be confused by the device as an obstacle that prevents the window reaching a position desired by the user and thus provides to block and eventually reverse the motion of the glass.

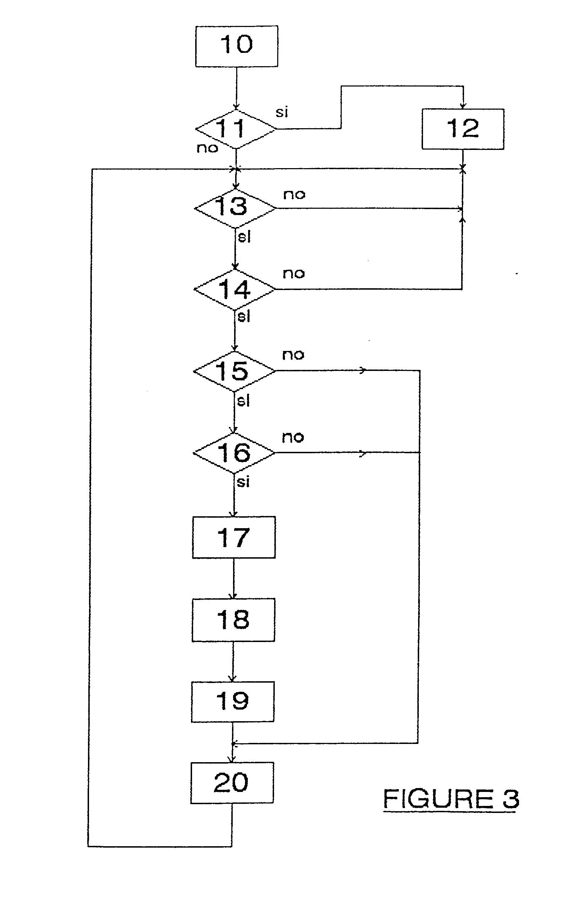

Figure 3 represents the learning flow chart of the device of the end of run point of the first installation, where with 10 a block is indicated that provides for reading the data of the end of run memorised by said control means and then passes the control to the block 11. Block 11 is a test block, it verifies whether any end of run data is memorised. In the affirmative case control passes to block 12, in the negative case control passes to block 13.

Block 12 provides to disable the automatic movement of the glass of the window, i.e. the movement that allows the window to reach an end of run position following a single command and passes the control to block 13. Block 13 is a test block, it verifies whether the motor is on or not. In the affirmative case control passes to block 14, in the negative case returns the control to its input.

Block 14 is a test block, it verifies whether the window has arrived at an end of run position, for example to the superior abutment. In the affirmative case control passes to block 15, in the negative case control returns to the block 13.

Block 15 is a test block it verifies whether the inhibition button has been pressed, i.e. the button that disables the security function. In the affirmative case control passes to block 16, in the negative case control passes to block 20.

The block 16 is a test block, it verifies whether the raising button remains pressed, after the window has reached an end of run position, for example the superior abutment position, for a given period of time, for example two seconds. In the affirmative case passes the control to block 17, in the negative case passes the. control to the block 20.

Block 17 provides for reading the data supplied by the resistor means and passes the control to the block 18.

Block 18 provides for memorising the new data of the value of end of run replacing the data previously memorised and passes the control to block 19.

Block 19 provides to enable the automatic movement of the window and passes the control to block 20.

Block 20 provides to disable the motor and returns the control to block 13.

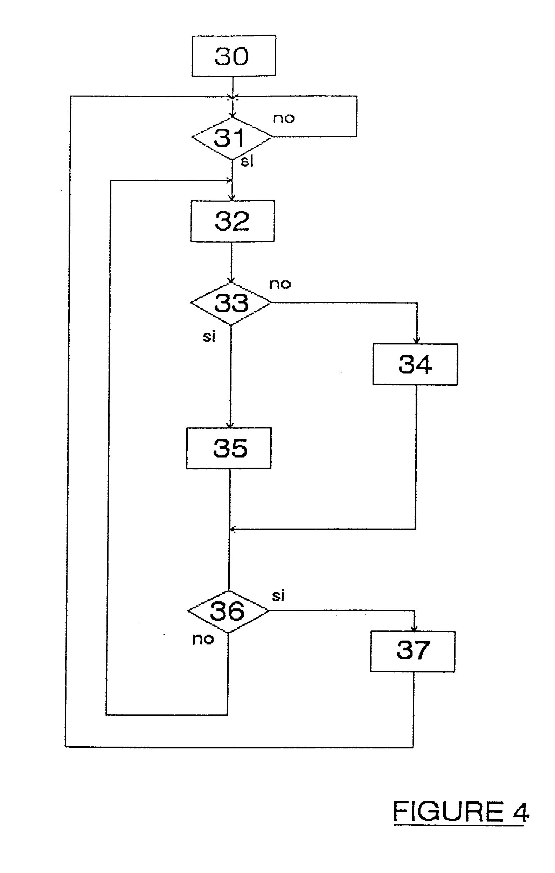

Figure 4 represents a flow chart that the device provides, in the case in which the potentiometer results in being broken or for some reason disconnected, to disable the automatic functioning of the window, where 30 indicates a block that provides for reading the data memorised previously by the microprocessor and passes the control to block 31 which is a test block, it provides to verify whether the motor is on. In the affirmative case the control is passed to block 32, in the negative case the control is returned to its own input.

Block 32 reads the data supplied by the potentiometer and passes the control to block 33.

Block 33 is a test block, it provides for verifying whether in following the movement of the window a variation of the resistive value of the potentiometer is verified. In the affirmative case control passes to the block 35, in the negative case the control passes to block 34.

Block 34 provides to disable the automatic movement of the window allowing to manually command the movement of the window and simultaneously signalling to the user the irregularity of the position sensor and passes the control to block 36.

Block 35 provides to replace in memory, instant for instant, the data supplied by the potentiometer as the window climbs towards an end of run position, in order to provide the control data of variation of the value of the potentiometer to the aforementioned block 33. The control then passes to the block 36.

The block 36 is a test block, it provides to verify whether it is necessary to remove the supply from the motor or because the window has arrived at end of run, or because an over-current is verified in the motor due to an obstacle that prevents the window run, or because, by way of commands, the user has decided to stop the window in a given position.

In the affirmative case the control passes to block 37, in the negative case the control returns to the block 32.

The block 37 provides for removing the supply from the motor and, where necessary, to invert the motion. Finally block 37 returns the control to the block 31. It is important to note how the described device allows the user to personally ascertain eventual malfunctions of the resistor means, in this case of a potentiometer, therefore allowing a prompt appropriate intervention by a garage.

From the executed description the advantages of the command device for electric windows, in particular for automobiles, object of the present invention are clear: from which the security, reliability, the lower cost and the efficiency of the circuit are cited, that allows for its good functioning in any working condition, without that passing from an electric window system to another or from a service condition to another is the cause of malfunctions.

It is clear that numerous variants are possible, for the man skilled in the art, to the command device for electric windows, in particular for automobiles, without departing from the novelty principles inherent in the present invention.

## Claims

1. Command device for electric windows, in particular for automobiles, of the type comprising manual command means able to pilot a direct current motor, to obtain the raising or lowering of the glass of the window, control means able to detect an end of run position of the window and means that indicate, to said control means, the position of the glass during its run, characterised in that the end of run position of the window is automatically memorised in appropriate memory means, and the memorised value is automatically updated every time that said window reaches an end of run position being superior or equal to the position previously memorised.

2. Command device for electric windows, according to claim 1, characterised in that numerous positions can be memorised during the run of the window.

3. Command device for electric windows, according to claim 2, characterised in that to determined points of the position of the glass of the window during its run, a circulating current value is associated in the electric motor.

4. Command device for electric windows, according to claim 3, characterised in that when said current values do not coincide with said position values of the window memorised in said memory of said control means, it intervenes on the electric motor in an opportune way.

5. Command device for electric windows, according to claim 4, characterised in that it intervenes by blocking the motion of the electric motor.

6. Command device for electric windows, according to claim 4, characterised in that it intervenes on the electric motor by inverting the motion.

7. Command device for electric windows, according to claim 1, characterised in that it is able to reveal eventual break downs of said window position detecting means, supervising during the run the indication of the window position control means.

8. Command device for electric windows, according to claim 1, characterised in that it is able to apprehend the end of run position of the first installation.
